# EUROPÄISCHE PATENTSCHRIFT

(11) **EP 1 376 618 B1**
(45) Veröffentlichungstag und Bekanntmachung des Hinweises auf die Patenterteilung: **07.01.2009**
(21) Anmeldenummer: 03004108.1
(22) Anmeldetag: 26.02.2003
(51) Int. Cl.: H01B 3/42, H01B 7/08, H01B 7/29

(54) **Flexibles Band- oder Flachkabel**
Flexible ribbon cable or flexible flat cable
Câble-ruban flexible ou câble plat flexible

(30) Priorität: 21.06.2002 DE 10227890
(43) Veröffentlichungstag der Anmeldung: 02.01.2004
(73) Patentinhaber: Carl Freudenberg KG, 69469 Weinheim (DE)
(72) Erfinder: Reibel, Denis, 67850 Herrlisheim (FR); Kalbe, Michael, 69469 Weinheim (DE); Grynaeus, Peter, 69488 Birkenau (DE); Kober, Horst, 69469 Weinheim (DE)
(74) Vertreter: Reinhard - Skuhra - Weise & Partner GbR

(56) Entgegenhaltungen:
- US-A1- 2002 062 974

## Beschreibung

Die Erfindung betrifft ein flexibles Band- oder Flachkabel bestehend aus mindestens einem zwischen mindestens zwei Vliesstoffschichten eingebetteten Signalleiter.

Aus dem Dokument US-A 5,049,435 sind flexible Leiterplatten bekannt, die mit aus polyaromatischen Amiden bestehenden Vliesstoffen verstärkt sind und als Flachkabel eingesetzt werden können. Die aus polyaromatischen Amiden bestehenden Vliesstoffe werden dazu mit einem hitze- und/oder lichthärtbaren Harz imprägniert.

Weiterhin ist aus dem Dokument US-A 5,744,756 ein mit schmelzgeblasenen Mikrofasern isoliertes Kabel bekannt.

Die Erfindung hat sich die Aufgabe gestellt, ein einfach und kostengünstig herzustellendes, flexibles Band- oder Flachkabel anzugeben.

Erfindungsgemäß wird die Aufgabe durch ein flexibles Band- oder Flachkabel gelöst, dass aus mindestens einem zwischen mindestens zwei Vliesstoffschichten eingebetteten Signalleiter besteht, wobei die Vliesstoffschichten lediglich aus Polyester-, Polyamid-, syndiotaktischen Polystyren-, Polysulfon- und/oder Glasfasern hergestellt sind, deren Poren zwischen den Fasern oder Filamenten so stark mit einem Bindemittel gefüllt sind, dass eine Durchschlagsfestigkeit von mindestens 500 V und/oder eine Dimensionsstabilität von mindestens 0,05% bei einer Temperatur von 140°C über einen Zeitraum von 24 Stunden vorhanden ist. Überraschenderweise zeigen die verbindungsgemäßen Band- oder Flachkabel auch ohne Verwendung von polyaromatischen Amiden eine Durchschlagsfestigkeit und eine Dimensionsstabilität gemäß den Anforderungen der Industrie.

Vorzugsweise sind in den Band- oder Flachkabeln Signalleiter mit verschiedenen Querschnitten und/oder aus verschiedenen Werkstoffen vorhanden. Diese Signalleiter können Licht- und/oder Stromleiter sein. Die elektrischen Signalleiter weisen vorteilhafterweise eine Dicke von 5 bis 200 µm auf und der Abstand voneinander ist ≥ ihrer Dicke. Vorteilhafterweise beträgt das Rastermaß der Signalleiter zueinander 1,25; 1,27; 2,5 oder 2,54 mm.

Vorzugsweise sind in dem erfindungsgemäßen Band- oder Flachkabel zur Verbesserung der Flammbeständigkeit Flammschutzmittel enthalten, die entweder zusammen mit dem Bindemittel oder bei der Vlieslegung eingebracht werden.

Besonders bevorzugt sind als Flammschutzmittel Lederfasern enthalten, die insbesondere Lederfaserrückstände der Chromlederherstellung sind.

Die Erfindung betrifft weiterhin ein Verfahren zur Herstellung eines Band- oder Flachkabels, wobei Vliesstoffe mit einer Luftdurchlässigkeit von 20 bis 8000 mm/s bei einer Druckdifferenz von 200 Pa verwendet werden, zwischen die mindestens ein Signalleiter eingebracht wird und so mit einem Bindemittel imprägniert wird, dass eine Durchschlagsfestigkeit von mindestens 500 V und/oder eine Dimensionsstabilität von mindestens 0,05% bei einer Temperatur von 140°C über einen Zeitraum von 24 Stunden erzielt wird.

Vorteilhafterweise wird das Bindemittel vor dem Verbinden der Vliesstoffschichten mit dem Signalleiter auf die Vliesstoffschichten in flüssiger, pulvriger oder faseriger Form oder als Folie aufgebracht.

Als Bindemittel werden erfindungsgemäß thermoplastische Polymere wie zum Beispiel Polyolefine, Polyester, Polyimide, Polyamide, Polyurethane, Polyacrylate oder Nitrilbutylkautschuk eingesetzt oder venetzbare Systeme wie zum Beispiel Polyurethane, Epoxydharzsysteme oder UV venetzbare Produkte eingesetzt.

Besonders bevorzugt ist ein Verfahren, bei dem die Vliesstoffschichten mit dem Signalleiter zu einem Verbund zusammenlaminiert und anschließend mit einem Bindemittel imprägniert werden. Das Band- oder Flachkabel wird entweder durch Trocknen und/oder Vernetzung der Bindemittellösung und/oder Dispersion in den fertigen Zustand überführt.

Die erfindungsgemäßen Band- oder Flachkabel werden zur Verkabelung in Fahrzeugen oder in Haushaltselektrogeräten eingesetzt.

Die Erfindung wird nachfolgend anhand von Beispielen näher erläutert.

### Beispiel 1

Ein flexibles Flachkabel bestehend aus zwei Polyethylenterephthalat-Spinnvliesstoffen wird hergestellt, indem man zwischen die Spinnvliesstoffe die elektrischen Signalleiter mit eine Dicke von 30 µm mit einem Abstand der Signalleiter zueinander von 2,5 mm mit Hilfe eines Copolyamid-Klebevliess bei 120°C einlaminiert.

### Beispiel 2

Ein flexibles Flachkabel bestehend aus zwei Polyethyleneterephthalat-Spinnvliesstoffen wird hergestellt, indem man die Spinnvliesstoffe mit einer Mischung aus einem Copolyamid und einem Epoxydharz bepudert, mehrere elektrischen Signalleiter mit eine Dicke von 30 µm mit einem Abstand der Signalleiter zueinander von 2,54 mm auflegt und bei 160°C laminiert.

### Beispiel 3

Ein flexibles Flachkabel bestehend aus zwei Polyethylenterephthalat-Spinnvliesstoffen wird hergestellt, indem man die Spinnvliesstoffe mit einem Polyurethan-Schmelzkleber bepudert, elektrischen Signalleiter mit einer Dicke von 30 µm mit einem Abstand der Signalleiter zueinander von 2,5 mm auflegt und bei 165°C laminiert.

### Beispiel 4

Ein flexibles Flachkabel bestehend aus zwei Polyethylenterephthalat-Spinnvliesstoffen wird hergestellt, indem man die Spinnvliesstoffe mit einer Mischung eines Copolyesters und eines Epoxydharzes bepudert, mehrere elektrischen Signalleiter mit einer Dicke von 30 µm mit einem Abstand der Signalleiter zueinander von 2,54 mm auflegt und bei 175°C laminiert.

Die Dimensionsstabilität nach einer thermischen Behandlung bei 140°C für 30 Minuten und 24 Stunden wurde beurteilt im Vergleich mit einem Standard-Flachkabel aus Folie. Die Ergebnisse sind in der folgenden Tabelle zusammengefaßt:

| Materialbezeichnung | Schrumpf in % | |
|---|---|---|
| | 30 Minuten bei 140°C | 24 Stunden bei 140°C |
| | | |
| Standard Kabel | -0.03 | -0.30 |
| Beispiel 1 | 0.03 | 0.05 |
| Beispiel 2 | -0.04 | -0.02 |
| Beispiel 3 | 0.04 | 0.05 |
| Beispiel 4 | 0.01 | -0.03 |

## Patentansprüche

1. Flexibles Band- oder Flachkabel, welches aus mindestens einem zwischen mindestens zwei Vliesstoffschichten eingebetteten Signalleiter besteht und optional Flammschutzmittel enthält, wobei die Vliesstoffschichten lediglich aus Polyester-, Polyamid-, Polyolefin, syndiotaktischen Polystyren-, Polysulfon- und/oder Glasfasern bestehen, deren Poren zwischen den Fasern oder Filamenten so stark mit einem Bindemittel gefüllt sind, dass eine Durchschlagsfestigkeit von mindestens 500 V und/oder eine Dimensionsstabilität von mindestens 0,05% bei einer Temperatur von 140°C über einen Zeitraum von 24 Stunden vorhanden ist.

2. Band- oder Flachkabel nach Anspruch 1, **dadurch gekennzeichnet, dass** Signalleiter mit verschiedenen Querschnitten und/oder aus verschiedenen Werkstoffen vorhanden sind.

3. Band- oder Flachkabel nach einem der Ansprüche 1 oder 2, **dadurch gekennzeichnet, dass** Lichtwellen- und/oder Stromleiter vorhanden sind.

4. Band- oder Flachkabel nach einem der Ansprüche 1 bis 3, **dadurch gekennzeichnet, dass** die elektrischen Signalleiter eine Dicke von 5 µm bis 200 µm und einen Abstand ≥ ihrer Dicke aufweisen.

5. Band- oder Flachkabel nach einem der Ansprüche 1 bis 4, **dadurch gekennzeichnet, dass** die Signalleiter in einem Rastermaß von 1,25; 1,27; 2,5 oder 2,54 mm angeordnet sind.

6. Band- oder Flachkabel nach einem der Ansprüche 1 bis 5, **dadurch gekennzeichnet, dass** als Flammschutzmittel Lederfasern enthalten sind.

7. Band- oder Flachkabel nach Anspruch 6, **dadurch gekennzeichnet, dass** als Flammschutzmittel Lederfaserrückstände der Chromlederherstellung enthalten sind.

8. Verfahren zur Herstellung eines Band- oder Flackkabels nach einem der Ansprüche 1 bis 7, **dadurch gekennzeichnet, dass** Vliesstoffe mit einer Luftdurchlässigkeit von 20 bis 8000 m/s bei einer Druckdifferenz von 200 Pa verwendet werden zwischen die mindestens ein Signalleiter eingebracht wird und mit einem Bindemittel so imprägniert werden, dass eine Durchschlagfestigkeit von mindestens 500 V und/oder eine Dimensionsstabilität von mindestens 0,15 % bei einer Temperatur von 140°C über einen Zeitraum von 24 Stunden erzielt wird.

9. Verfahren nach Anspruch 8, **dadurch gekennzeichnet, dass** das Bindemittel vor dem Verbinden der Viiesstoffschichten mit dem Signalleiter auf die Vliesstoffschichten in flüssiger, pulvriger oder faseriger Form oder als Folie aufgebracht wird.

10. Verfahren nach Anspruch 8, **dadurch gekennzeichnet, dass** als Bindemittel thermoplastische Polyolefine, Polyester, Polyimide, Polyamide, Polyacrylate, Polyurethane oder Ntrilbutylkautschuk eingesetzt wird.

11. Verfahren nach Anspruch 8, **dadurch gekennzeichnet, dass** das Bindemittel Polymere aus der Gruppe ausgewählt sind, die Polymere mit reaktiven chemischen Funktionen einschließt, welche sich miteinander vernetzen können, wobei dies unter der Zufuhr von Energie in Form von Wärme und/oder UV-Strahlung und/oder Elektronenbeschuß geschieht, welche diese Reaktion einleitet, unterhält oder fördert.

12. Verfahren nach Anspruch 8, **dadurch gekennzeichnet, dass** die Vliesstoffschichten und Signalleiter zu einem Verbund zusammenlaminiert und mit einem Bindemittel imprägniert werden.

13. Verwadung eines Band- oder Flachkabels nach einem der Ansprüche 1 bis 7 zur Verkabelung in Fahrzeugen.

14. Verwendung eines Band- oder Flachkabels nach einem der Ansprüche 1 bis 7 zur Verkabelung in Haushaltselektrogeräten.

## Claims

1. A flexible ribbon or flat cable consisting of at least two layers of nonwoven fabric, a signal lead embedded inbetween, and optionally flame retardant, the nonwoven fabric layers consisting only of fibers of polyester, polyamide, polyolefin, syndiotactic polystyrene, polysulfone and/or glass, wherein the pores between the fibres or filaments are filled with a binder to such an extent, that a dielectric strength of at least 500 V and/or a dimensional stability of at least 0.05% at a temperature of 140°C over a period of 24 hours is provided.

2. The ribbon or flat cable of claim 1, wherein signal leads with different cross-sections and/or made from different materials are comprised.

3. The ribbon or flat cable of claim 1 or 2, wherein a light conductor and/or a current conductor is comprised.

4. The ribbon or flat cable of any of claims 1 to 3, wherein the electrical conductors have a thickness from 5 µm to 200 µm and a distance equal to or greater than their thickness.

5. The ribbon or flat cable of any of claims 1 to 4, wherein the signal leads are arranged at a pitch of 1.25, 1.27, 2.5 or 2.54 mm.

6. The ribbon or flat cable of any of claims 1 to 5, wherein leather fibers are comprised as the flame retardant.

7. The ribbon or flat cable of claim 6, wherein leather fiber residues from the production of chrome leather are comprised as the flame retardant.

8. A method for manufacturing a ribbon or flat cable of any of claims 1 to 7, wherein nonwoven fabrics having an air permeability of 20 to 8000 m/s at a pressure differential of 200 Pa are used, between which at least one signal lead is inserted and which are impregnated with a binder so as to provide a dielectric strength of at least 500 V and/or a dimensional stability of at least 0.15% at a temperature of 140 °C over a period of 24 hours.

9. The method of claim 8, wherein the the binder is applied to the nonwoven fabric layers before binding them to each other in liquid, powder or fibrous form or as a foliage.

10. The method of claim 8, wherein the binder is thermoplastic polyolefins, polyesters, polyimides, polyamides, polyacrylates, polyurethanes or nitrile butyl rubber.

11. The method of claim 8 wherein the binder is selected from polymers comprising those with reactive chemical functionalities able to be cross-linked with each other while supplying energy in the form of heat and/or UV radiation and/or electron bombardment, wherein the energy initiates, maintains or promotes the chemical reaction.

12. The method of claim 8, wherein the non woven fabric layers and the signal leads are laminated together and impregnated with a binder.

13. Use of ribbon or band cables of any of claims 1 to 7 as a wiring in vehicles.

14. Use of ribbon or band cables of any of claims 1 to 7 as a wiring in household electrical devices.

## Revendications

1. Câble flexible plat ou en ruban, constitué d'au moins un conducteur de signaux intercalé entre au moins deux couches de feutre et contenant facultativement un agent d'ignifugation, les couches de feutre étant constituées uniquement de fibres de polyester, de polyamide, de polyoléfine, de polystyrène syndiotactique, de polysulfone et/ou de verre, les pores situés entre les fibres ou les filaments étant remplis d'un liant en quantité suffisante pour obtenir une résistance au claquage d'au moins 500 V et/ou une stabilité dimensionnelle d'au moins 0,05 % à une température de 140°C pendant une durée de 24 heures.

2. Câble plat ou en ruban selon la revendication 1, **caractérisé en ce qu'**il présente des conducteurs de signaux dont les sections transversales et/ou les matériaux sont différents.

3. Câble plat ou en ruban selon l'une des revendications 1 ou 2, **caractérisé en ce qu'**il présente des conducteurs d'ondes lumineuses et/ou des conducteurs de courant.

4. Câble plat ou en ruban selon l'une des revendications 1 à 3, **caractérisé en ce que** les conducteurs de signaux électriques ont une épaisseur de 5 µm à 200 µm et sont écartés les uns des autres d'une distance ≥ leur épaisseur.

5. Câble plat ou en ruban selon l'une des revendications 1 à 4, **caractérisé en ce que** les conducteurs de signaux sont disposés à un pas de 1,25; 1,27; 2,5 ou 2,54 mm.

6. Câble plat ou en ruban selon l'une des revendications 1 à 5, **caractérisé en ce qu'**il contient comme agent d'ignifugation des fibres de cuir.

7. Câble plat ou en ruban selon la revendication 6, **caractérisé en ce qu'**il contient comme agent d'ignifugation des résidus de fibres de cuir provenant de la préparation de cuir chromé.

8. Procédé de fabrication d'un câble plat ou en ruban selon l'une des revendications 1 à 7, **caractérisé en ce que** l'on utilise des feutres dont la perméabilité à l'air est de 20 à 8 000 m/s à une différence de pression de 200 Pa entre le ou les conducteurs de signaux et **en ce que** ces feutres sont imprégnés d'un liant de manière à obtenir une résistance au claquage d'au moins 500 V et/ou une stabilité dimensionnelle d'au moins 0,15 % à une température de 140°C pendant une durée de 24 heures.

9. Procédé selon la revendication 8, **caractérisé en ce que** le liant est appliqué sur les couches de feutre sous forme liquide, pulvérulente ou fibreuse ou comme feuille avant la liaison des couches de feutre avec le conducteur de signaux.

10. Procédé selon la revendication 8, **caractérisé en ce que** l'on y utilise comme liant des polyoléfines thermoplastiques, des polyesters, des polyimides, des polyamides, des polyacrylates, des polyuréthanes ou du caoutchouc nitrile-butyle.

11. Procédé selon la revendication 8, **caractérisé en ce que** comme liant, on sélectionne des polymères dans l'ensemble qui inclut les polymères à fonctions chimiques réactives qui peuvent réticuler les uns avec les autres, cette réticulation s'effectuant par un apport d'énergie sous forme de chaleur et/ou de rayonnement UV et/ou de tir d'électrons qui lance, maintient ou favorise cette réaction.

12. Procédé selon la revendication 8, **caractérisé en ce que** les couches de feutre et le conducteur de signaux sont stratifiés ensemble pour former un composite et sont imprégnés d'un liant.

13. Utilisation d'un câble plat ou en ruban selon l'une des revendications 1 à 7 pour le câblage de véhicules.

14. Utilisation d'un câble plat ou en ruban selon l'une des revendications 1 à 7 pour le câblage d'appareils électroménagers.
